**Europäisches Patentamt**

**European Patent Office**

**Office européen des brevets**

(11) Veröffentlichungsnummer: **0 184 051**
**B1**

(12) **EUROPÄISCHE PATENTSCHRIFT**

(45) Veröffentlichungstag der Patentschrift:
**26.10.88**

(21) Anmeldenummer: **85114513.6**

(22) Anmeldetag: **15.11.85**

(51) Int. Cl.⁴: **F 16 D 3/79**

(54) **Flexible Ganzstahl-Wellenkupplung.**

(30) Priorität: **29.11.84 DE 3443485**

(43) Veröffentlichungstag der Anmeldung:
**11.06.86 Patentblatt 86/24**

(45) Bekanntmachung des Hinweises auf die Patenterteilung:
**26.10.88 Patentblatt 88/43**

(84) Benannte Vertragsstaaten:
**AT BE CH FR GB IT LI LU NL SE**

(56) Entgegenhaltungen:
**CH - A - 471 980**
**CH - A - 472 594**
**CH - A - 472 595**
**DE - A - 264 560**
**GB - A - 2 065 828**
**US - A - 1 454 087**
**US - A - 4 073 161**

(73) Patentinhaber: **ATEC-Weiss KG,**
**Von-Siemens-Strasse 1, D-4426 Vreden (DE)**

(72) Erfinder: **Weiss, Rudolf, Händelstrasse 13,**
**D-4426 Vreden (DE)**

(74) Vertreter: **Patentanwaltsbüro Cohausz & Florack,**
**Schumannstrasse 97, D-4000 Düsseldorf 1 (DE)**

## Beschreibung

Die Erfindung bezieht sich auf eine flexible Ganzstahl-Wellenkupplung mit einem Anschlussflansch für jede der beiden Kupplungshälften und einer zwischen und mit axialem Abstand von den beiden Anschlussflanschen angeordneten und mit Spannbolzen in Umfangsrichtung wechselweise mit dem einen oder anderen Anschlussflansch verbundenen, federelastischen Lamellenpaketkranz, wobei der Lamellenpaketkranz auf Spannbüchsen der Spannbolzen sitzt und zwischen Distanzringen zusammen mit dem Anschlussflansch verspannt ist.

Solche Kupplungen werden einzeln oder auch paarweise hintereinander geschaltet zur Übertragung von Drehmomenten eingesetzt. Als Einzelkupplung lässt sie einen Winkel und Axialversatz und als Kupplungspaar sogar zusätzlich einen Parallelversatz des Antriebs gegenüber dem Antrieb zu.

Damit solche Kupplungen mit hohen Drehzahlen betrieben werden können, sind grosse Anstrengungen gemacht worden, um Unwuchten schon bei der Montage zu vermeiden. Unwuchten werden vor allem durch den Lamellenpaketkranz verursacht. Das gilt nicht nur für einen Lamellenpaketkranz, der sich aus einzelnen Lamellenlaschen zusammensetzt, sondern auch für einen solchen aus Lamellenringen.

Bei einer bekannten Wellenkupplung der eingangs genannten Art sind zylindrische Passsitze mit und auch ohne Spannbüchsen mit hoher Passgenauigkeit zwischen dem Spannbolzen, der Büchse und den Bohrungen im Lamellenpaketkranz einerseits und den Bohrungen im Anschlussflansch andererseits vorgehen. Solche Passsitze erfordern sowohl einen hohen Fertigungsaufwand als auch eine sehr sorgfältige und damit auch einen hohen Zeitaufwand erfordernde Montage (DE-AS 26 45 600).

Um diese Nachteile zu vermeiden, bildet bei einer anderen Wellenkupplung der Lamellenkranz zusammen mit einem damit durch Schraubenbolzen verbundenen Zentrierring ein vormontiertes Paket. Der Zentrierring weist eine fein bearbeitete Umfangsfläche auf, die mit einer entsprechend fein bearbeiteten Umfangsfläche an einem Flansch eine zylindrischen Passsitz bildet. Diese vormontierte Einheit ist mittels Spannbolzen gegebenenfalls unter Zwischenschaltung von Führungsbüchsen wechselweise an den beiden Flanschen befestigt. Zwar wird bei dieser Wellenkupplung der Lamellenkranz durch den Zentrierring zentriert gehalten, doch sind keine Massnahmen getroffen, um das fertigungsbedingte Spiel zwischen Spannbolzen und dem Lamellenpaketkranz zu kompensieren. Bei stossartiger Belastung kann es zu einer Versetzung der Spannbolzen wegen des Spiels kommen, was eine neue Unwucht zur Folge hat.

Es zeigte sich im Betrieb mit Wellenkupplungen der eingangs genannten Art, dass selbst bei sehr präzise gefertigten Passsitzen es an den Einspannstellen des Lamellenpaketkranzes zu durch Kerbkorrosion bedingten Brüchen kam.

Der Erfindung liegt deshalb die Aufgabe zugrunde, eine Wellenkupplung der eingangs genannten Art zu schaffen, die den Einsatz von sowohl aus Laschen als auch aus Ringlamellen bestehenden Lamellenpaketkränzen ermöglicht, die eine Vormontage des Lamellenpaketkranzes nicht erforderlich macht und die schliesslich weniger anfällig gegen durch Kerbkorrosion bedingte Brüche ist.

Diese Aufgabe wird erfindungsgemäss dadurch gelöst, dass der Sitz zwischen jeder Spannbüchse (15, 35, 39) und dem Spannbolzen (12) mindestens im Bereich des Lamellenpaketes ( (10) gebildet ist, wobei die axialen Abmessungen des Lamellenpaketkranzes, der Distanzringe und der Anschlussflansche einerseits und die der Spannbüchse andererseits sowie die konischen Sitze derart aufeinander abgestimmt sind, dass durch die axiale Spannkraft des Spannbolzens der an den Einspannstellen unter axialer Vorspannung stehende Lamellenkranz am Sitz der wegen des konischen Sitzes beim Vorspannen aufgeweiteten Spannbüchsen zusätzlich unter radialer Vorspannung steht.

Mit der Erfindung wird auf verhältnismässig einfache Art und Weise ein absolut spielfreier Sitz des Lamellenpaketkranzes auf den Spannbolzen erzielt, ohne dass es nötig ist, hochpräzise gearbeitete und damit in der Herstellung teure Sitzflächen herzustellen. An jeder Einspannstelle wird durch einen einzigen Spannbolzen sowohl die axiale Vorspannung als auch die radiale Vorspannung im Lamellenpaketkranz erzeugt. Aufgrund der durch die aufgeweitete Spannhülse erzeugten radialen Vorspannung an jeder Einspannstelle ist es im Unterschied zu nicht radial vorgespannten Lamellenpaketkränzen nicht länger möglich, dass sich die Bohrungen in den Lamellen an den Einspannstellen bei in den Lamellen wirkenden Zugspannungen ovalförmig aufweiten. Die sonst mit der ovalen Aufweitung verbundene Bewegung der Lamellen an der Einspannstelle und die dadurch verursachte, für die Brüche verantwortliche Rebikorrosion tritt also nicht mehr auf. Aufgrund der so erzeugten radialen Vorspannung an den Sitzen der Lamellen verkraftet die Kupplung auch Stossbelastungen die sonst zu einer Verlagerung der Lamellen und damit auch zu Unwuchten führten. Schliesslich ist bei der Erfindung die Montage gegenüber anderen Kupplungen vereinfacht. Ohne Vormontage mit zusätzlichen Zentrierringen und ohne hochpräzise gearbeitete zylindrische Sitze kann sie an Ort und Stelle durchgeführt werden.

Die Herstellung eines spielfreien Sitzes zwischen dem Spannbolzen und dem jeweiligen Anschlussflansch ist weniger kritisch als die Herstellung des Sitzes im Bereich des Lamellenpaketes. Gleichwohl ist es auch an dieser Stelle von Vorteil, wenn der Sitz zwischen dem Spannbolzen und dem jeweiligen Anschlussflansch gegebenenfalls zusammen mit einer Spannbüchse als Spannkonus ausgebildet ist.

Nach einer weiteren Ausgestaltung sollten die konischen Sitze im Bereich des Lamellenpaketes zwischen der Spannbüchse und dem Spannbolzen vorgesehen sein, weil sich an dieser Stelle die konischen Sitze leichter herstellen lassen als zwischen der Spannbüchse und den Bohrungen des Lamellenpaketes. In entsprechender Weise sind die konischen Sitze im Bereich des jeweiligen Anschlussflansches zwischen der Spannbüchse und den Spannbolzen vorgesehen. Es ist aber auch möglich, an dieser Stelle die konischen Sitze zwischen der Spannbüchse und den Bohrungen des Anschlussflansches vorzusehen.

Zur Erleichterung der Montage aber auch der Demontage sollten die konischen Sitze im Bereich des Lamellenpaketes und der Anschlussflansche einen unterhalb der Selbsthemmung liegenden Neigungswinkel haben. Vorzugsweise sollten sie an beiden Sitzen denselben Neigungswinkel haben.

Sofern sowohl im Bereich des Lamellenpaketes als auch im Bereich des jeweiligen Anschlussflansches eine Spannbüchse vorgesehen ist, können diese beiden Spannbüchsen zu einer durchgehenden Spannbüchse vereinigt sein. Die auf den Lamellenkranz ausgeübte Zentrierwirkung kann weiter dadurch verbessert werden, dass die Lochkreise der Anschlussflansche etwas grösser als die zugehörigen Lochkreise des Lamellenpaketkranzes sind. Auf diese Art und Weise wird auch in Umfangsrichtung der Lamellen eine Vorspannung erzeugt. Besonders bei Lamellenlaschen werden dadurch Längenunterschiede ausgeglichen.

Im folgenden wird die Erfindung anhand einer Zeichnung, die verschiedene Ausführungsbeispiele darstellt, näher erläutert.

Im einzelnen zeigen:

Fig. 1 zwei gleiche, hintereinander geschaltete und Hohlwellen miteinander verbindende Wellenkupplungen im Axialschnitt,

Fig. 2 zwei gleiche, hintereinander geschaltete und zwei Hohlwellen miteinander verbindende Wellenkupplungen im Axialschnitt in einer zu Fig. 1 abgewandelten Ausführung,

Fig. 3 die Verbindungsstelle eines Lamellenpaketkranzes an einem Anschlussflansch im Axialschnitt in einer ersten Ausführung,

Fig. 4 den Gegenstand gemäss Fig. 3 in einer zweiten Ausführung,

Fig. 5 den Gegenstand gemäss Fig. 3, in einer dritten Ausführung,

Fig. 6 den Gegenstand gemäss Fig. 3 in einer vierten Ausführung und

Fig. 7 den Gegenstand gemäss Fig. 3 in einer fünften Ausführung.

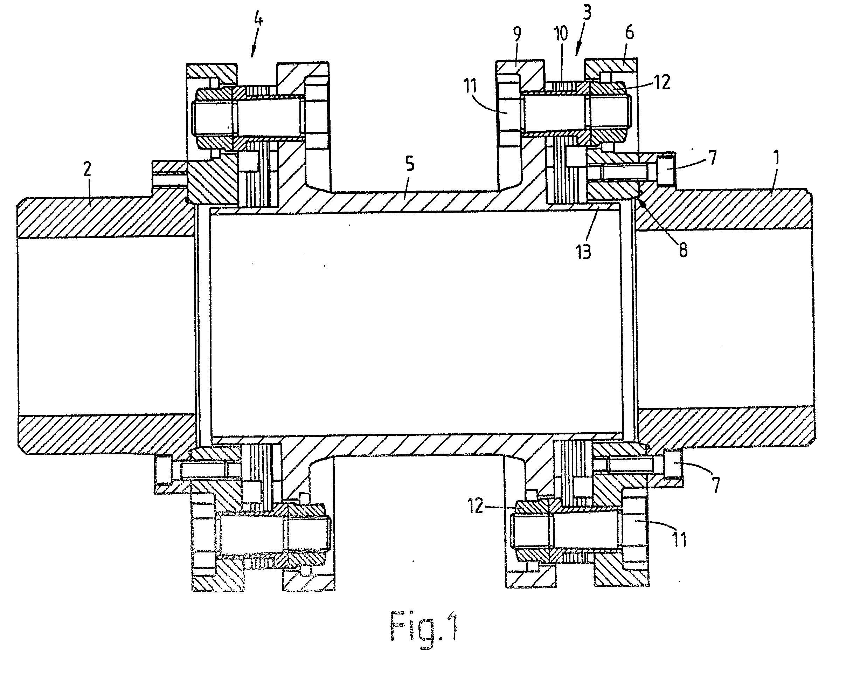

Gemäss Fig. 1 sind zwei Hohlwellen 1, 2 über zwei gleichartige Kupplungen 3, 4, die miteinander über eine Hülse 5 verbunden sind, miteinander gekuppelt. Da die beiden Kupplungen 3, 4 den gleichen Aufbau haben, wird im folgenden nur die Kupplung 3 in ihren Einzelheiten beschrieben.

An der Hohlwelle 1 ist ein Anschlussflansch 6 mittels Schraubenbolzen 7 befestigt. Zur Zentrierung des Anschlussflansches 6 auf der Hohlwelle 1 ist ein konischer Passsitz 8 vorgesehen. Dem Anschlussflansch 6 liegt ein Anschlussflansch 9 der Verbindungshülse 5 gegenüber. Zwischen den beiden Anschlussflanschen 6, 9 ist ein Lamellenpaketkranz 10 angeordnet, der sich aus einzelnen Laschenpaketen zusammensetzt. Der mit Abstand zwischen den Flanschen 6, 9 angeordnete Lamellenpaketkranz 10 ist mittels Schraubenbolzen 11 wechselweise an dem einen und anderen Flansch 6, 9 angeschlossen. Wie der Zeichnung zu entnehmen ist, ist bei Befestigung des Lamellenkranzes 10 mittels des Schraubenbolzens 11 an dem Anschlussflansch 9 der Flansch 6 an der gegenüberliegenden Stelle mit Spiel gegenüber der Bolzenmutter 12 ausgebildet.

Damit bei einem Bruch der Kupplung 3 die Hülse 5 nicht führungslos im Bereich der Kupplung 3 wird, weist die Hülse 5 einen Ansatz 13 auf, der bis in den Bereich des Anschlussflansches 6 ragt.

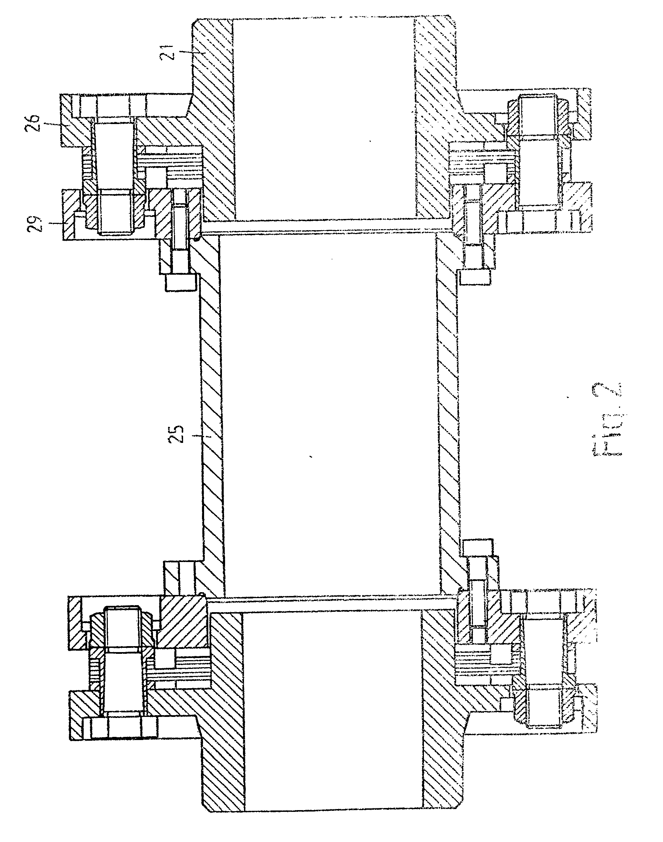

Das Ausführungsbeispiel der Fig. 2 unterscheidet sich von dem Ausführungsbeispiel der Fig. 1 nur dadurch, dass an der Welle 21 der zugehörige Anschlussflansch 26 nicht angeschraubt ist, sondern angeformt ist, dafür aber der der Hülse 25 zugehörige Anschlussflansch 29 angeschraubt ist.

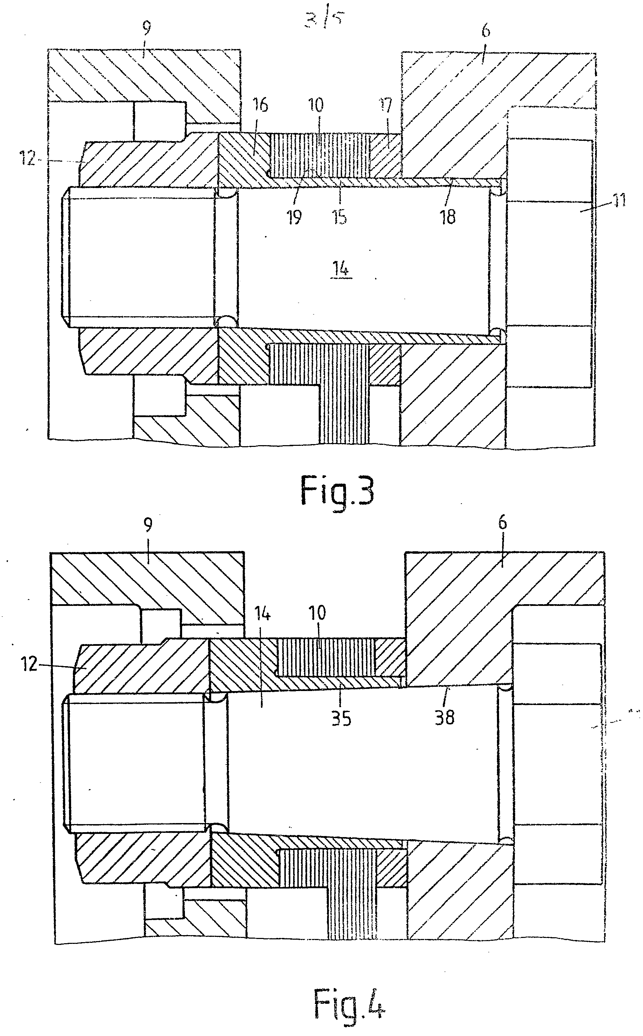

Gemäss Fig. 3 ist der Schaft 14 des Spannbolzens 11 konisch ausgebildet. Die Innenbohrung einer auf dem Schaft 14 sitzenden Spannhülse 15 ist entsprechend konisch ausgebildet. Die Spannhülse weist auf der der Bolzenmutter 12 zugewandten Seite einen als Distanzring für den Lamellenpaketkranz 10 dienenden Kragen 16 auf. Auf der gegenüberliegenden Seite des Lamellenpaketkranzes 10 zwischen diesem und dem benachbarten Anschlussflansch 6 sitzt auf der Spannhülse 15 ein Distanzring 17. Die Spannhülse 15 ragt durch den Lamellenpaketkranz 10 bis in die Bohrung des Anschlussflansches 6. Die Spannhülse 15 ist aussen zylindrisch. Zylindrisch sind auch die Bohrungen 18, 19 im Anschlussflansch 6 und im Lamellenpaketkranz 10.

Beim Spannen der Spannbolzen wird die Spannhülse 15 radial aufgeweitet. Eventuelle Toleranzen zwischen der Spannhülse 15 und den Bohrungen 18, 19 des Anschlussflansches 6 und des Lamellenpaketkranzes 10 werden ausgeglichen und sogar eine Vorspannung erzeugt. Stossbelastungen, übertragen von Drehmomenten können deshalb nicht länger eine Versetzung der einzelnen Teile und damit eine neue Unwucht der Wellenkupplung bewirken.

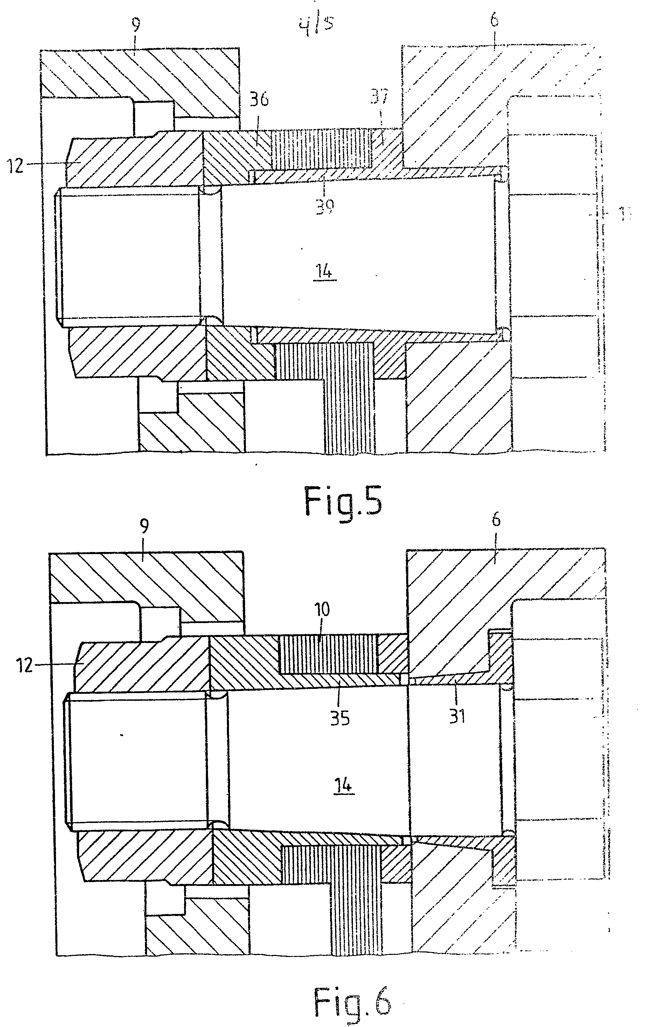

Die Ausführung gemäss Fig. 4 unterscheidet sich von der der Fig. 3 nur dadurch, dass die Spannhülse 35 nicht bis in den Bereich des Anschlussflansches 6 hineinragt. Bei dieser Ausführung ist die Bohrung 38 im Anschlussflansch 6 selbst konisch ausgebildet.

Das Ausführungsbeispiel gemäss Fig. 5 unterscheidet sich von dem der Fig. 3 lediglich darin, dass der Distanzring 37 als Kragen einstückig mit der Spannbüchse 39 verbunden ist und der andere Distanzring (36) nicht als angeformter Kragen ausgebildet ist, sondern als selbständige Ringscheibe.

Beim Ausführungsbeispiel der Fig. 6, das im Bereich der Spannbüchse 35 dem der Fig. 4 entspricht, ist im Bereich des Anschlussflansches 6 eine separate Spannbüchse 31 vorgesehen, die innen zylindrisch und aussen konisch ist, so dass sie als Spannkonus mit der entsprechend konisch gestalteten Bohrung im Anschlussflansch (6) zusammenwirkt.

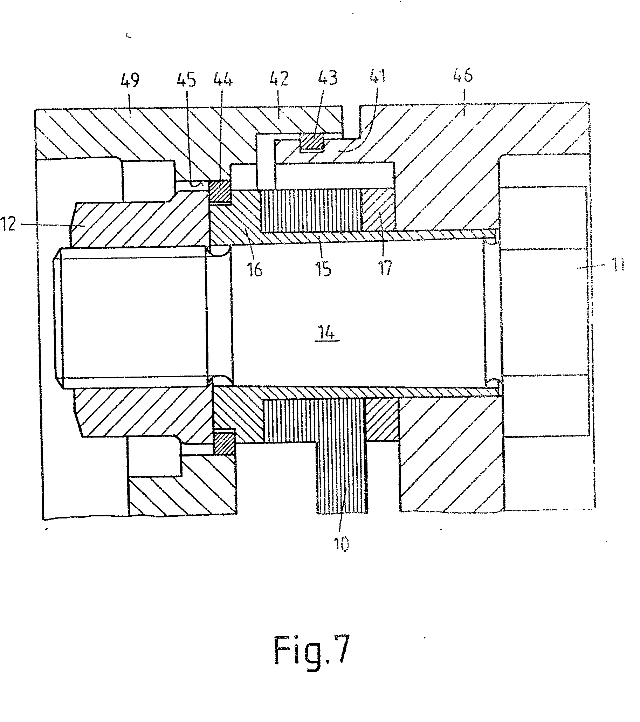

Das Ausführungsbeispiel der Fig. 7 entspricht bezüglich des Anschlusses des Lamellenkranzes 10 an den Anschlussflansch dem Ausführungsbeispiel der Fig. 3. Die benachbarten Anschlussflansche 46, 49 tragen jedoch koaxiale, einander überlappende hülsenförmige Ansätze 41, 42, zwischen denen nach Art von Kolbenringen wirkende Dichtungen 43 eingesetzt sind. Durch diese Massnahme soll verhindert werden, dass aus dem Raum zwischen den Flanschen Luft nach aussen entweicht, was mit störenden Geräuschen verbunden ist. Zusätzlich ist eine weitere Dichtung 44 zwischen der Schraubverbindung und der entsprechenden mit Spiel gestalteten Bohrung 45 im Anschlussflansch 49 vorgesehen. Auf diese Art und Weise wird das gesamte Lamellenpaket praktisch nach aussen abgeschottet und Luftwirbelverluste vermieden.

## Patentansprüche

1. Flexible Ganzstahl-Wellenkupplung mit einem Anschlussflansch (6, 9, 26, 29, 46, 49) für jede der beiden Kupplungshälften und einer zwischen und mit axialem Abstand von den beiden Anschlussflanschen (6, 9, 26, 29, 46, 49) angeordneten und mit Spannbolzen (11) in Umfangsrichtung wechselweise mit dem einen oder anderen Anschlussflansch (6, 9, 26, 29, 46, 49) verbundenen, federelastischen Lamellenpaketkranz (10), wobei der Lamellenpaketkranz (10) auf Spannbüchsen (15, 35, 39) der Spannbolzen (11) sitzt und zwischen Distanzringen (16, 17, 36, 37) zusammen mit dem Anschlussflansch (6, 9, 26, 29, 46, 49) verspannt ist, dadurch gekennzeichnet, dass der Sitz zwischen jeder Spannbüchse (15, 35, 39) und dem Spannbolzen (11) mindestens im Bereich des Lamellenpaketes (10) konisch ausgebildet ist, wobei die axialen Abmessungen des Lamellenpaketkranzes (10), der Distanzringe (16, 17, 36, 37) und der Anschlussflansche (6, 9, 26, 29, 46, 49) einerseits und die der Spannbüchse (15, 35, 39) andererseits sowie die konischen Sitze derart aufeinander abgestimmt sind, dass durch die axiale Spannkraft des Spannbolzens (11) der an den Einspannstellen unter axialer Vorspannung stehende Lamellenpaketkranz (10) am Sitz der wegen des konischen Sitzes beim Vorspannen aufgeweiteten Spannbüchsen (15, 35, 39) zusätzlich unter radialer Vorspannung steht.

2. Ganzstahl-Wellenkupplung nach Anspruch 1, dadurch gekennzeichnet, dass der Sitz zwischen dem Spannbolzen (11) und dem jeweiligen Anschlussflansch (6, 9, 26, 29, 46, 49) gegebenenfalls zusammen mit einer Spannbüchse (15, 35, 39) als Spannkonen ausgebildet sind.

3. Ganzstahl-Wellenkupplung nach einem der Ansprüche 1 bis 2, dadurch gekennzeichnet, dass die konischen Sitze im Bereich des jeweiligen Anschlussflansches (6, 9, 26, 29) zwischen der Spannbüchse (15, 35, 39) und dem Spannbolzen (11) vorgesehen sind.

4. Ganzstahl-Wellenkupplung nach einem der Ansprüche 1 bis 3, dadurch gekennzeichnet, dass die konischen Sitze im Bereich des Lamellenpaketes (10) und der Anschlussflansche (6, 9, 26, 29, 46, 49) einen unterhalb der Selbsthemmung liegenden Neigungswinkel haben.

5. Ganzstahl-Wellenkupplung nach einem der Ansprüche 1 bis 4, dadurch gekennzeichnet, dass die konischen Sitze im Bereich des Lamellenpaketes (10) und der Anschlussflansche (6, 9, 26, 29, 46, 49) denselben Neigungswinkel haben.

6. Ganzstahl-Wellenkupplung nach einem der Ansprüche 1 bis 5, dadurch gekennzeichnet, dass für die konischen Sitze im Bereich des Lamellenpaketes (10) und der Anschlussflansche (6, 9, 26, 29, 46, 49) jeweils eine durchgehende Spannbüchse (15, 39) vorgesehen ist.

7. Ganzstahl-Wellenkupplung nach einem der Ansprüche 1 bis 2, dadurch gekennzeichnet, dass die konischen Sitze im Bereich der Anschlussflansche (6 und in Fig. 4) zwischen dem Anschlussflansch (6) und den Spannbolzen (11) vorgesehen sind.

8. Ganzstahl-Wellenkupplung nach einem der Ansprüche 1 bis 7, dadurch gekennzeichnet, dass die Lochkreise der Anschlussflansche (6, 9, 26, 29, 46, 49) etwas grösser als die zugehörigen Lochkreise des Lamellenpaketkranzes (10) sind.

## Revendications

1. Accouplement d'arbres tout-acier flexible avec une flasque de raccordement (6, 9, 26, 29, 46, 49) pour chacun des demi-accouplements et avec une couronne à empilage de lamelles (10) à élasticité de ressort disposée à écartement radial entre les deux flasques de raccordement (6, 9, 26, 29, 46, 49) et reliée en direction périphérique par des boulons de tension (11) tour à tour avec l'une ou l'autre flasque de raccordement (6, 9, 26, 29, 46, 49), la couronne à empilage de lamelles (10) reposant sur des douilles de serrage (15, 35, 39) des boulons de tension (11) et étant déformée entre des bagues d'écartement (16, 17, 36, 37) en même temps que la flasque de raccordement (6, 9, 26, 29, 46, 49), caractérisé par le fait que l'ajustement entre chaque douille de serrage (15, 35, 39), et le boulon de tension (11) est formé conique au moins dans la région de l'empilage de lamelles (10), les dimensions axiales de la couronne à empilage de lamelles (10), des bagues d'écartement (16, 17, 36, 37) et des flasques de raccordement (6, 9, 26, 29, 46, 49) d'une part et celles des douilles de serrage (15, 35, 39) d'autre part ainsi que les ajustements de telle manière que la couronne à empilage de lamelles (10) se trouvant sous précontrainte axiale aux points de serrage du fait de la force de tension axiale du bou-

lon de tension (11), se trouve de plus sous précontrainte radiale à l'ajustement des douilles de tension (15, 35, 39) élargies lors de la précontrainte du fait de l'ajustement conique.

2. Accouplement d'arbres tout-acier selon la revendication 1, caractérisé par le fait que l'ajustement entre le boulon de tension (11) et la flasque de raccordement respective (6, 9, 26, 29, 46, 49) est, le cas échéant, formé avec une douille de serrage (15, 35, 39) en tant que cône de tension.

3. Accouplement d'arbres tout-acier selon l'une des revendications 1 et 2, caractérisé par le fait que l'ajustement conique est prévu dans la région de la flasque de raccordement respective (6, 9, 26, 29) entre la douille de serrage (15, 35, 39) et le boulon de tension (11).

4. Accouplement d'arbres tout-acier selon l'une des revendications 1 à 3, caractérisé par le fait que les ajustements coniques dans la région de l'empilage de lamelles (10) et de la flasque de raccordement (6, 9, 26, 29, 46, 49) ont un angle d'inclinaison se trouvant au-dessous de l'autoblocage.

5. Accouplement d'arbres tout-acier selon l'une des revendications 1 à 4, caractérisé par le fait que les ajustements coniques dans la région de l'empilage de lamelles (10) et de la flasque de raccordement (6, 9, 26, 29, 46, 49) ont le même angle d'inclinaison.

6. Accouplement d'arbres tout-acier selon l'une des revendications 1 à 5, caractérisé par le fait que, pour les ajustements coniques dans la région de l'empilage de lamelles (10) et de la flasque de raccordement (6, 9, 26, 29, 46, 49), une douille de serrage (15, 39) traversante est prévue à chaque fois.

7. Accouplement d'arbres tout-acier selon l'une des revendications 1 et 2, caractérisé par le fait que les ajustements coniques dans la région des flasques de raccordement (6 à la figure 4) sont prévus entre le flasque de raccordement (6) et le boulon de tension (11).

8. Accouplement d'arbres tout-acier selon l'une des revendications 1 à 7, caractérisé par le fait que les cercles des trous des flasques de raccordement (6, 9, 26, 29, 46, 49) sont légèrement plus grands que les cercles des trous qui en font partie de la couronne à empilage de lamelles (10).

**Claims**

1. Flexible steel shaft coupling with a connecting flange (6, 9, 26, 29, 46, 49) for each of the two coupling halves and a resilient laminated stack collar (10) which is positioned between, and with an axial clearance from, the two connecting flanges (6, 9, 26, 29, 46, 49) and is connected by clamping bolts (11) alternately in the circumferential direction with one and then the other of the connecting flanges (6, 9, 26, 29, 46, 49), the laminated stack collar (10) being seated on clamping sleeves (15, 35, 39) of the clamping bolts (11) and being braced between spacer rings (16, 17, 36, 37) together with the connecting flange (6, 9, 26, 29, 46, 49), characterized in that the seat between each clamping sleeve (15, 35, 39) and the clamping bolt (11) has, at least in the region of the laminated stack (10), a conical shape, the axial dimensions of the laminated stack collar (10), the spacer rings (16, 17, 36, 37) and the connecting flanges (6, 9, 26, 29, 46, 49) on the one side and those of the clamping sleeve (15, 35, 39) on the other and the conical seats being adjusted to one another in such a way that due to the axial tensioning force of the clamping bolts (11) the laminated stack collar (10), which is under axial pretension at the clamping points, is also under radial pretension at the seats of the clamping sleeves (15, 35, 39) widened during pretensioning because of the conical seat.

2. Steel shaft coupling according to Claim 1, characterized in that the seat between the clamping bolt (11) and the relevant connecting flange (6, 9, 26, 29, 46, 49) is formed as a clamping cone, if necessary with a clamping sleeve (15, 35, 39).

3. Steel shaft coupling according to one of Claims 1 to 2, characterized in that the conical seats are provided in the region of the relevant connecting flange (6, 9, 26, 29) between the clamping sleeves (15, 35, 39) and the clamping bolts (11).

4. Steel shaft coupling according to one of Claims 1 to 3, characterized in that the conical seats in the region of the laminated stack (10) and of the connecting flanges (6, 9, 26, 29, 46, 49) have an inclination less than the self-locking angle.

5. Steel shaft coupling according to one of Claims 1 to 4, characterized in that the conical seats in the region of the laminated stack (10) and of the connecting flanges (6, 9, 26, 29, 46, 49) have the same inclination.

6. Steel shaft coupling according to one of Claims 1 to 5, characterized in that a continuous clamping sleeve (15, 39) is provided for the conical seats in the region of the laminated stack (10), and of the connecting flanges (6, 9, 26, 29, 46, 49).

7. Steel shaft coupling according to one of Claims 1 to 2, characterized in that the conical seats are provided in the region of the connecting flanges (6 in Fig. 4) between the connecting flange (6) and the clamping bolts (11).

8. Steel shaft coupling according to one of Claims 1 to 7, characterized in that the bolt pitch circles of the connecting flanges (6, 9, 26, 29, 46, 49) are somewhat larger than the associated bolt pitch circles of the laminated stack collar (10).

1/5

Fig. 1

Fig. 2

Fig.3

Fig.4

Fig.5

Fig.6

5/5

Fig.7